# EUROPÄISCHE PATENTSCHRIFT

(11) **EP 0 752 369 B1**
(45) Veröffentlichungstag und Bekanntmachung des Hinweises auf die Patenterteilung: **25.11.1998**
(21) Anmeldenummer: 96110035.1
(22) Anmeldetag: 21.06.1996
(51) Int. Cl.: B65B 65/02, B65B 19/24

(54) **Einrichtung zur Übertragung von Kräften im Zusammenhang mit insbesondere Verpackungsmaschinen**
Device for transferring forces in particular connected with packaging machines
Dispositif pour transférer des forces en combinaison spécialement avec des machines d'emballage

(30) Priorität: 04.07.1995 DE 19523681
(43) Veröffentlichungstag der Anmeldung: 08.01.1997
(73) Patentinhaber: Focke & Co. (GmbH & Co.), 27283 Verden (DE)
(72) Erfinder: Focke, Heinz, 27283 Verden (DE)
(74) Vertreter: Bolte, Erich, Dipl.-Ing.

(56) Entgegenhaltungen:
- DE-A- 2 259 193
- US-A- 4 852 335

## Beschreibung

Die Erfindung betrifft eine Einrichtung zur Übertragung von Kräften im Zusammenhang mit Maschinen, insbesondere Verpackungsmaschinen, bestehend aus einem ersten Organ mit kreisförmigem bzw. zylindrischem Querschnitt, insb. einer Welle oder einem Wellenzapfen, und mit einem zweiten Organ, insb. einem Betätigungshebel, wobei das zweite Organ eine Bohrung aufweist, in der das erste Organ mit einem Endbereich verankert ist, wobei das zweite Organ im Bereich der Bohrung mit einem offenen, durchgehenden Schlitz versehen ist, und wobei sich im zweiten Organ quer zum Schlitz eine Klemmschraube erstreckt, derart, daß beim Anziehen derselben die Bohrung enger wird.

In Maschinen für unterschiedliche Anwendungsbereiche, vorzugsweise in Verpackungsmaschinen, werden Kräfte und Bewegungen durch Hebel, Wellen, Schubstangen etc. auf andere maschinentechnische Organe übertragen. Die Steuerung der Bewegungen wird dabei wegen der Genauigkeit überwiegend mit Hilfe von Kurvenscheiben oder Kurvennuten bewirkt, an denen bzw. in denen mit den Organen verbundene Tastrollen laufen.

Die Erfindung befaßt sich mit dem Thema einer sinnvollen Verbindung von Organen wie (Antriebs-)Hebeln, Mitnehmer- bzw. Schieberorganen, Halterungen für Verpackungen etc. mit runden, nämlich im Querschnitt kreisförmigen, also zylindrischen Wellen, Stangen, Achsen etc.

Zum einen geht es um die Lösung eines speziellen Problems, nämlich darum, bei der Montage der Maschinen bzw. bei der Verbindung der runden, zylindrischen Organe mit den diesen zugeordneten (zweiten) Organen den Aufwand von Monteuren bei der Ermittlung der präzisen Relativstellung zu vermindern, ohne dabei jedoch auf Genauigkeit hinsichtlich der Relativstellung zu verzichten.

Vor allem bei Verpackungsmaschinen ist es wichtig, daß die zur Übertragung von Kräften miteinander verbundenen Organe, nämlich runde bzw. zylindrische Organe einerseits und an diesen versetzt, außermittig angeordnete Organe andererseits, eine präzise Relativstellung aufweisen. Dies erschwert die Montage der Maschine und auch später fällige Montagen bei Reparaturen und anderen Betriebsunterbrechungen. Bei Verpackungsmaschinen besteht die besondere Problematik darin, daß Falt- und Transportrevolver üblicherweise mit einer Vielzahl von übereinstimmenden Gruppen von Organen ausgestattet sind, die den Montageaufwand vervielfachen.

Aus der DE-A-2259193 ist es bekannt, einen Hebel auf einem Wellenzapfen unter Verwendung einer geschlitzten Bohrung zu befestigen. Quer zum Schlitz ist eine Klemmschraube vorgesehen, wobei dessen Anziehen der Schlitz und damit die Bohrung enger werden. Eine definierte Relativstellung ergibt sich dadurch nicht.

Das von der Erfindung zu lösende Problem besteht darin, eine exakte Winkel- bzw. Relativstellung der miteinander verbundenen ersten und zweiten Organe zu gewährleisten, wobei das erste Organ einen kreisförmigen Querschnitt im Bereich der Verbindung mit dem zweiten Organ aufweist.

Zur Lösung dieses Problems wird erfindungsgemäß vorgeschlagen, daß das in die Bohrung eintretende Ende des ersten Organs eine Abplattung mit ebener Justierfläche aufweist, daß die Bohrung eine mit der Abplattung korrespondierende Gegen-Abplattung aufweist, wobei das erste Organ mit der Abplattung an der Gegen-Abplattung anliegt, und daß das zweite Organ auf der zur Gegen-Abplattung gegenüberliegenden Seite mit dem Schlitz versehen ist.

Durch diese Maßnahme wird eine auf die exakte Sollstellung ausgerichtete formschlüssige Verbindung zwischen den von Haus aus runden Organen und den auf oder an diesen befestigten Organen gewährleistet. Die formschlüssig miteinander korrespondierenden Bereiche, nämlich Lagerflächen der zylindrischen Organe einerseits und die diese umgebenden Lagerflächen in Lageraugen, -bohrungen bzw. -öffnungen müssen präzise gearbeitet sein, so daß sie exakt zueinander passen und die genaue Relativstellung ohne Nacharbeiten gewährleisten. Zu diesem Zweck sind die miteinander korrespondierenden Abplattungen vorgesehen.

Exakte Relativstellungen, die auch bei wiederholter Demontage und Montage gewährleistet sein müssen, verlangen Verpackungsmaschinen, beispielsweise solche für die Herstellung von Weichbecher-Packungen für Zigaretten. Andrückorgane zum Andrücken von Zuschnitten an Faltdorne eines Faltrevolvers werden über Kurvenscheiben mit Tastrollen gesteuert (US 4 852 335).

Erfindungsgemäß ist der Betätigungshebel Teil eines Viergelenkgetriebes bzw. eines Viergelenkgestänges, welches die Bewegung des Andrückorgans nach Maßgabe der feststehenden Kurvenscheibe bei Drehung des Faltrevolvers bewirkt. Bei der Übertragung von Bewegungen durch Viergelenkgestänge ist eine genaue Relativstellung zwischen einem Betätigungshebel des Gestänges einerseits und der dieses antreibenden Welle andererseits besonders wichtig.

Ein weiteres gleichartiges Beispiel für die Anwendung der Erfindung ist die Verbindung zwischen einer zylindrischen Schubstange und einem Schieberkopf bzw. einer Schieberplatte, wobei diese (zweiten) Organe stets bei wiederholter Montage eine exakte Winkelstellung an der Schubstange einnehmen sollen. Die Bewegung der Schubstange wird dabei durch eine Kurvenscheibe über Tastrollen gesteuert.

Weitere Merkmale der Erfindung beziehen sich auf konstruktive Details der selbstjustierenden Verbindung zwischen den Organen sowie auf Anwendungsbeispiele. Letztere sind in den Zeichnungen dargestellt. Im einzelnen zeigt:
- Fig. 1: einen Betätigungshebel als Beispiel für ein "zweites" Organ, teilweise im Schnitt,
- Fig. 2: den Betätigungshebel gemäß Fig. 1 in Ansicht,
- Fig. 3: einen Endbereich einer Welle als "erstes" Organ,
- Fig. 4: eine Ansicht auf den Endbereich der Welle gemäß Fig. 3,
- Fig. 5: eine Einzelheit des Betätigungshebels gemäß Fig. 2 in stark vergrößertem Maßstab,
- Fig. 6: Einzelheiten eines Faltrevolvers für Zigarettenpackungen mit einem ersten und zweiten Organ im Vertikal- bzw. Radialschnitt,
- Fig. 7: einen Ausschnitt eines Faltrevolvers für eine Verpackungsmaschine in axialer Ansicht,
- Fig. 8: eine Einzelheit des Faltrevolvers gemäß Fig. 7 in vergrößertem Maßstab.

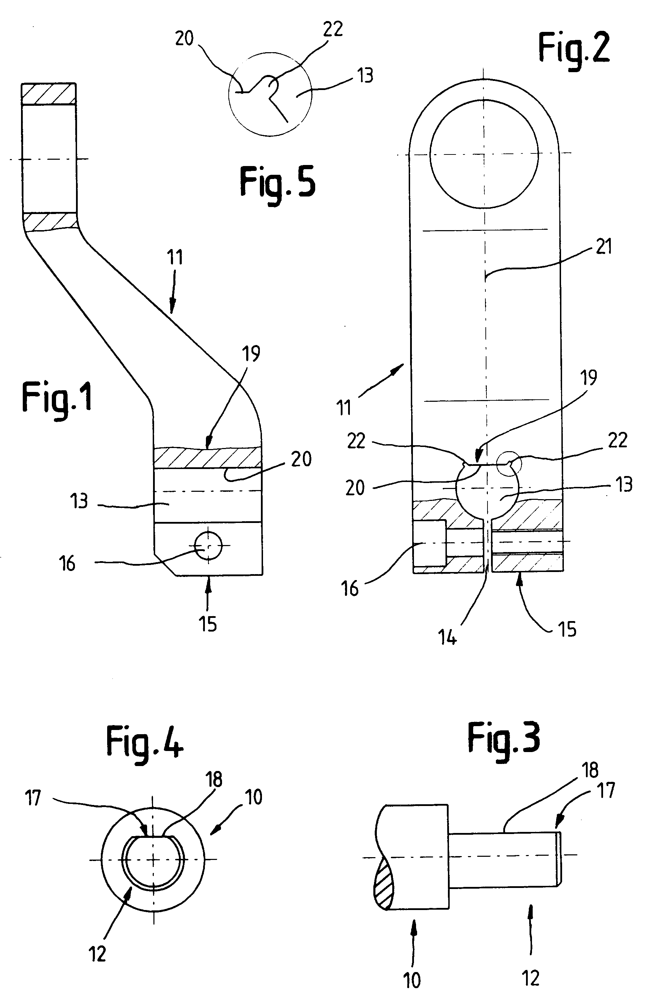

Fig. 1 bis 5 zeigen ein Ausführungsbeispiel für die Verbindung eines ersten und eines zweiten Organs. Das erste Organ ist dabei eine Welle 10. Mit dieser verbunden ist ein (einarmiger) Betätigungshebel 11 als zweites Organ. Die Welle 10 hat einen kreisförmigen Querschnitt, ist also insgesamt zylindrisch ausgebildet. Der Betätigungshebel 11 ist auf der Welle 10 in einem Endbereich derselben gelagert und in fester Relativstellung fixiert. Der den Betätigungshebel 11 aufnehmende Endbereich der Welle 10 ist mit geringerem Durchmesser ausgebildet als der übrige Teil der Welle 10, so daß ein abgesetztes Wellenende 12 entsteht. Die Länge dieses Wellenendes 12 entspricht der Breite des Betätigungshebels (Abmessung in Axialrichtung) im Bereich der Lagerung auf der Welle 10.

Der Betätigungshebel 11 ist an einem Ende mit einer Bohrung 13 bzw. einem Lagerauge versehen. In dieser Bohrung 13 ist das Wellenende 12 fixiert. Bei dem vorliegenden Ausführungsbeispiel sind Welle 10 und Betätigungshebel 11 durch Festklemmen miteinander verbunden. Zur Bohrung 13 des Betätigungshebels 11 führt deshalb ein mittiger Schlitz 14, und zwar ausgehend von einer endseitigen Querfläche 15 des Betätigungshebels 11. Es werden so in diesem Endbereich des Betätigungshebels 11 zwei Klemmteile geschaffen, die in montierter Stellung durch eine Klemmschraube 16 zusammengedrückt werden, derart, daß der Betätigungshebel 11 mit der Welle 10 bzw. dem Wellenende 12 durch Klemmkraft verbunden ist.

Die praktische Anwendung dieser Getriebeverbindung von Welle 10 und Betätigungshebel 11 erfordert es, daß eine präzise, auch bei wiederholtem Zusammensetzen exakt wieder eintretende Relativstellung des Betätigungshebels 11 quer zur Welle 10 gewährleistet ist. Zu diesem Zweck hat die Welle 10 bzw. das Wellenende 12 einen unrunden Querschnitt (Fig. 4). Auf einer zur Stellung des Betätigungshebels 11 passenden Seite ist das Wellenende 12 mit einer Abplattung 17 versehen. Durch diese wird eine ebene Justierfläche 18 am Wellenende 12 geschaffen, und zwar hier über die volle Länge desselben.

Die Bohrung 13 bzw. Öffnung im Betätigungshebel 11 hat eine auf den unrunden Querschnitt des Wellenendes 12 exakt abgestimmte Form und Abmessung. Die Bohrung 13 hat demnach eine passende Gegen-Abplattung 19 mit einer Anlagefläche 20, die mit der Justierfläche 18 des Wellenendes 12 korrespondiert.

Bei der Montage von Welle 10 und Betätigungshebel 11 erhält letzterer ohne Meß- und Kontrollmaßnahmen stets wiederkehrend eine exakte Relativ-, nämlich Winkelstellung, zur Welle 10, und zwar durch Anlage der Anlagefläche 20 an der Justierfläche 18. Die Relativstellung ist so getroffen, daß die Anlagefläche 20 des Betätigungshebels 11 mittig, nämlich quer, zu einer (gedachten) Längsmittelebene 21 des Betätigungshebels 11 gerichtet ist. Die Anlagefläche 20 liegt demnach exakt auf der zum Schlitz 14 gegenüberliegenden Seite.

Die Bohrung 13 kann auf verschiedene Weise in dieser Querschnittsform hergestellt werden. Vorteilhafterweise wird nach dem für andere Anwendungszwecke bekannten Verfahren des Erodierens gearbeitet. Dabei wird ein Draht unter hoher elektrischer Spannung durch das Metall hindurchgeführt entlang der Kontur der Bohrung 13. Der Erodierdraht kann dabei von außen her über den Schlitz 14 eingeführt werden.

In besonderer Weise sind Eckausbildungen 22 gestaltet, nämlich beim Übergang von der ebenen Anlagefläche 20 in den im übrigen kreisförmigen Bereich der Bohrung 13. Der Erodierdraht wird dabei geringfügig aus der Kontur der Bohrung 13 herausgeführt unter Bildung einer Vertiefung im Material (Fig. 5). Dadurch ist eine exakte Positionierung der Ecken bzw. Kanten als seitliche Begrenzung der Justierfläche 18 in der Bohrung 13 möglich.

Zur weiteren Sicherung des Betätigungshebels 11 auf dem Wellenende 12 dient eine Axialschraube 23, die von einer freien Endfläche des Wellenendes 12 achsmittig in dieses eintritt und mit einem entsprechend bemessenen Schraubenkopf den Betätigungshebel 11 hält.

Die beschriebene Einheit aus Welle 10 und Betätigungshebel 11 kann sinnvoll eingesetzt werden bei einem Faltrevolver für die Fertigung von Zigaretten-Weichpackungen (US 4 852 335). Bei einer derartigen Verpackungsmaschine ist ein Faltrevolver mit einer Mehrzahl von längs des äußeren Umfangs verteilt angeordneten Faltdornen 24 versehen. Die Faltdorne 24 sind einseitig abstehende Hohlkörper, um deren Außenfläche Zuschnitte zur Bildung der Weichbecher-Packung herumgefaltet werden. In einem ersten Faltabschnitt wird ein Innenzuschnitt, üblicherweise aus Papier oder Stanniol, um den Faltdorn herumgefaltet. Danach wird ein Zuschnitt aus Papier als Becher um den Faltdorn bzw. um den auf diesem sitzenden Innenzuschnitt herumgefaltet.

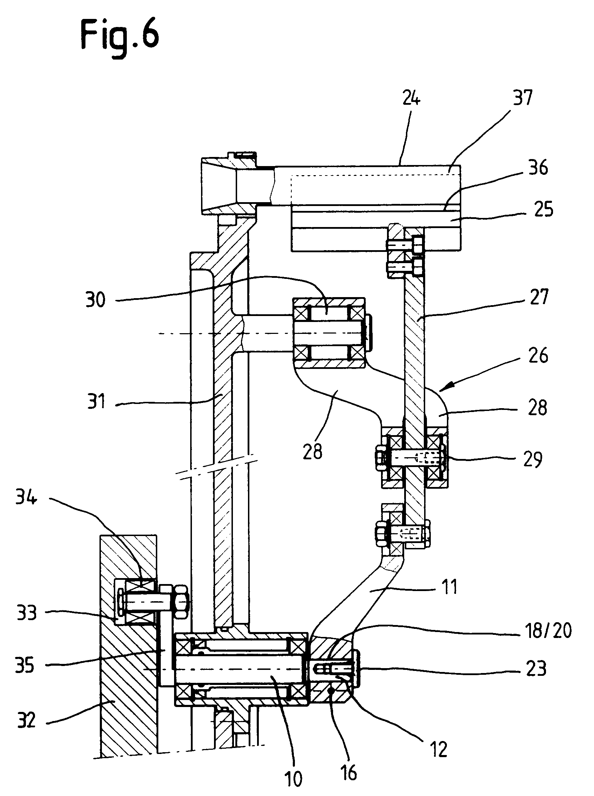

In den Zeichnungen sind verbesserte Lösungen für das zeitweilige Fixieren der Zuschnitte am Außenumfang des Faltdorns 24 und zur Durchführung von Faltschritten aufgezeigt gegenüber der bisherigen Ausführung gemäß US 4 852 335. Gemäß Fig. 6 wird ein Andrückorgan 25 durch ein Viergelenkgestänge 26 betätigt, nämlich in Richtung auf einen zugeordneten Faltdorn 24 bis zur Anlage an diesem bewegt und zurück in eine Ausgangsstellung. Dem Viergelenkgestänge 26 ist der Betätigungshebel 11 für eine gesteuerte Bewegung zugeordnet. Das Viergelenkgestänge 26 besteht dabei aus einem mit dem Andrückorgan 25 verbundenen Haupthebel 27, dem am freien Ende dieses Haupthebels 27 angelenkten Betätigungshebel 11 und einem zusätzlichen Stützhebel 28. Letzerer ist über ein erstes Gelenklager 29 schwenkbar mit dem Haupthebel 27 verbunden und über ein zweites Gelenklager 30 ortsfest gelagert, im vorliegenden Falle an einer mit dem Faltrevolver umlaufenden Revolverscheibe 31. Der Stützhebel hat eine gekröpfte Form, derart, daß dessen ortsfestes Gelenklager 30 in derselben Ebene liegt wie das vom Betätigungshebel auf dem Wellenende 12 gebildete Lager.

Das vorstehend geschilderte Viergelenkgetriebe bzw. Viergelenkgestänge 26 ist als Doppelschwinge ausgebildet. Der Betätigungshebel 11 ist dabei Antriebskurbel. Stützhebel 28 wirkt als Schwinge. Die Antriebskurbel bzw. der Betätigungshebel 11 und Schwinge bzw. Stützhebel 28 miteinander verbindende Haupthebel 27 ist in diesem Getriebe die Koppel. Die Antriebskurbel bzw. der Betätigungshebel 11 ist über eine Welle, nämlich die Welle 10, mit einem Rollenhebel eines Kurvengetriebes verbunden. Die besondere Gestaltung liegt in der lösbaren, verdrehsicheren und formschlüssigen Verbindung zwischen der Welle 10 und der Antriebskurbel bzw. dem Betätigungshebel 11.

Für die vorliegenden Zusammenhänge ist von Bedeutung, daß die Bewegungen des Betätigungshebels 11 bzw. des Viergelenkgestänges 26 von einer feststehenden Kurvenscheibe 32 steuerbar sind. Diese ist mit einer ringsherumlaufenden, geschlossenen Steuernut 33 versehen. Eine Tastrolle 34 tritt in die Steuernut 33 ein. Deren Bewegungen werden über einen Kurbelhebel 35 auf die Welle 10 und von dieser auf den Betätigungshebel 11 übertragen.

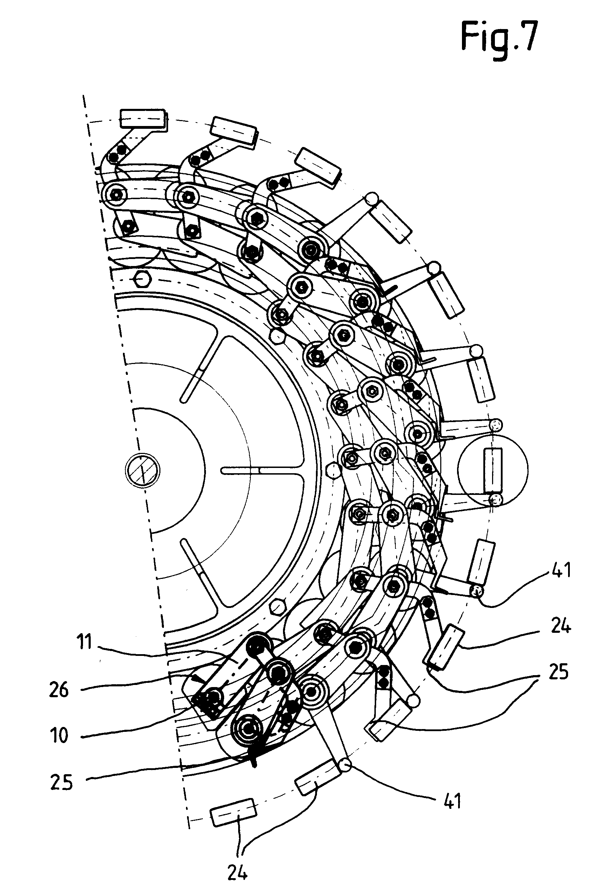

Für eine leistungsfähige Verpackungsmaschine zum Herstellen von Zigaretten-Weichpackungen ist ein Faltrevolver erforderlich, der eine Vielzahl von Faltdornen längs des Außenumfangs aufweist (Fig. 7). Jedem dieser vielen Faltdorne 24 ist ein Andrückorgan 25 zugeordnet, und demnach das Betätigungsgestänge, im vorliegenden Falle also ein Viergelenkgestänge 26.

Das Andrückorgan 25 ist in besonderer Weise ausgebildet, derart, daß es eine Doppelfunktion erfüllt. Es dient nämlich zum Anliegen eines Zuschnitts (nicht gezeigt) am Außenumfang eines Faltdorns 24 unter gleichzeitiger Faltung des Zuschnitts. Zu diesem Zweck ist das Andrückorgan 25 im Querschnitt winkelförmig ausgebildet mit zwei unter einem Rechten Winkel zueinander gerichteten Schenkeln 36 und 37. Diese sind einer radikal innenliegenden Wandung 38 und einer schmalen, annähernd radialgerichteten Seitenwandung 39 des Faltdorns 24 zugeordnet. Der von dem Andrückorgan 25 erfaßte Zuschnitt wird demnach durch den Schenkel 36 an die nach innen weisende, großflächige Wandung 38 und durch den quergerichteten Schenkel 37 an die schmale Seitenwandung des Faltdorns 24 angedrückt unter entsprechender Faltung. Der Zuschnitt wird dabei im Bereich einer in Drehrichtung rückwärtigen, radial innenliegenden Längskante 40 des Faltdorns 24 gefaltet und während einer gewissen Transportstrecke fixiert.

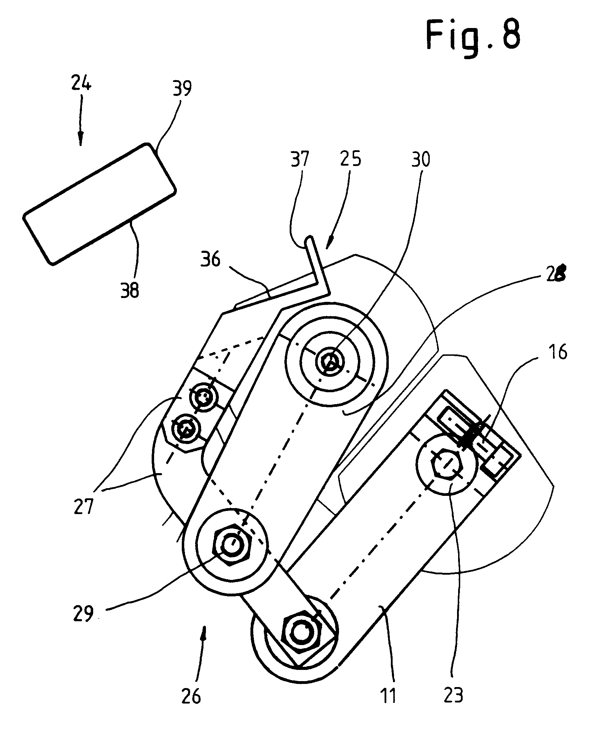

Um diese Falt- und Andrückbewegung des Andrückorgans 25 auszuführen, wird das Andrückorgan 25 aus einer in Radialrichtung des Faltrevolvers zurückgezogenen Stellung (Fig. 7 unten) durch das Betätigungsgestänge, im vorliegenden Falle durch das Viergelenkgestänge 26, in Richtung radial nach außen bewegt. Der Bewegungsverlauf ist translatorisch. Dies bedeutet, daß die Schenkel 36, 37 in einer Bewegung parallel zu der Wandung 38 und Seitenwandung 39 bis zur Anlage an dem Faltdorn 24 bewegt werden. In der Ausgangsstellung (Fig. 8 bzw. Fig. 7, unten), ist das Andrückorgan 25 versetzt zum zugeordneten Faltdorn 24 positioniert. Die Andrückbewegung vollzieht sich in Richtung auf die Längskante 40.

Bei dem gezeigten Ausführungsbeispiel wird ein Zuschnitt durch Drehbewegung des Faltrevolvers jeweils von einem Faltdorn 24 mitgenommen, und zwar auf der in Drehrichtung vornliegenden Seite, gegenüber zur Seitenwandung 39. In diesem Bereich wird zunächst der U-förmig gefaltete Zuschnitt durch ein Halteorgan 41 fixiert. In Förderrichtung rückwärts überstehende Faltlappen des Zuschnitts werden sodann in der beschriebenen Weise durch das Andrückorgan 25 erfaßt und unter winkelförmiger Faltung an den Faltdorn 24 angedrückt. Danach werden die weiteren Faltschritte am Faltdorn 24 vollzogen, insbesonderen in der in US 4 852 335 beschriebenen Weise.

## Patentansprüche

1. Einrichtung zur Übertragung von Kräften im Zusammenhang mit Maschinen, insbesondere Verpackungsmaschinen, bestehend aus einem ersten Organ mit kreisförmigem bzw. zylindrischem Querschnitt, insb. einer Welle (10) oder einem Wellenzapfen, und mit einem zweiten Organ, insb. einem Betätigungshebel (11), wobei das zweite Organ eine Bohrung (13) aufweist, in der das erste Organ mit einem Endbereich verankert ist, wobei das zweite Organ im Bereich der Bohrung (13) mit einem offenen, durchgehenden Schlitz (14) versehen ist, und wobei sich im zweiten Organ quer zum Schlitz (14) eine Klemmschraube (16) erstreckt, derart, daß beim Anziehen derselben die Bohrung (13) enger wird, **dadurch gekennzeichnet**, daß das in die Bohrung (13) eintretende Ende des ersten Organs (10) eine Abplattung (17) mit ebener Justierfläche (18) aufweist, daß die Bohrung (13) eine mit der Abplattung (17) korrespondierende Gegen-Abplattung (19) aufweist, wobei das erste Organ (10) mit der Abplattung (17) an der Gegen-Abplattung (19) anliegt, und daß das zweite Organ (11) auf der zur Gegen-Abplattung (19) gegenüberliegenden Seite mit dem Schlitz (14) versehen ist.

2. Einrichtung nach Anspruch 1, **dadurch gekennzeichnet,** daß die Gegen-Abplattung (19) im Bereich der Bohrung (13) des zweiten Organs (11) quer zu einer gedachten Längsmittelebene des Betätigungshebels (11) gerichtet ist.

3. Einrichtung nach Anspruch 1, **gekennzeichnet durch** folgende Merkmale:
a) das zweite Organ ist ein Betätigungshebel (11) und Teil eines Viergelenkgestänges (26),
b) der Betätigungshebel (11) ist mit einem Ende auf dem ortsfest gelagerten ersten Organ (10) - angeordnet,
c) am anderen Ende des Betätigungshebels (11) ist gelenkig ein Haupthebel (27) angebracht, an dessen freiem Ende ein Andrückorgan (25) zum Andrücken eines Zuschnitts einer Packung an einen Faltdorn (24) eines Faltrevolvers der Verpackungsmaschine angebracht ist,
d) ein Stützhebel (28) ist einerseits über Gelenklager (29) mit dem Haupthebel (27) verbunden und andererseits im Bereich eines Gelenklagers (30) ortsfest gelagert.

4. Einrichtung nach Anspruch 3, **dadurch gekennzeichnet**, daß das am Ende des Haupthebels (27) des Viergelenkgestänges (26) angeordnete Andrückorgan (25) im Querschnitt winkelförmig ausgebildet ist mit zwei unter einem rechten Winkel zueinander angeordneten Schenkeln (36, 37) zum Andrücken eines Zuschnitts an eine radial innenliegende Wandung (38) und an eine hierzu quergerichtete Seitenwandung (39) des Faltdorns (24) durch translatorische Bewegung des Andrückorgans (25).

## Claims

1. Apparatus for transmitting forces in conjunction with machines, in particular packaging machines, comprising a first member with a circular or cylindrical cross-section, in particular a shaft (10) or a shaft journal, and having a second member, in particular an actuating lever (11), the second member having a bore (13) in which the first member is anchored by one end region, the second member being provided, in the region of the bore (13), with an open through-slit (14), and a clamping screw (16) extending in the second member, transversely with respect to the slit (14), such that the bore (13) becomes narrower when said screw is tightened, characterized in that that end of the first member (10) which passes into the bore (13) has a flattened portion (17) with an adjustment surface (18), in that the bore (13) has a mating flattened portion (19) corresponding to the flattened portion (17), the first member (10) butting against the mating flattened portion (19) by way of the flattened portion (17), and in that, on the side which is located opposite the mating flattened portion (19), the second member (11) is provided with the slit (14).

2. Apparatus according to Claim 1, characterized in that the mating flattened portion (19) in the region of the bore (13) of the second member (11) is directed transversely with respect to an imaginary longitudinal centre plane of the actuating lever (11).

3. Apparatus according to Claim 1, characterized by the following features:
a) the second member is an actuating lever (11) and part of a four-bar linkage (26),
b) the actuating lever (11) is arranged on the first member (10), which is mounted in a stationary manner, by way of one end,
c) a main lever (27) is fitted in an articulated manner at the other end of the actuating lever (11) and has fitted at its free end a pressing-on member (25) for pressing a blank of a pack onto a folding mandrel (24) of a folding turret of the packaging machine,
d) a supporting lever (28) is, on the one hand, connected to the main lever (27) via articulation bearings (29) and, on the other hand, mounted in a stationary manner in the region of an articulation bearing (30).

4. Apparatus according to Claim 3, characterized in that the pressing-on member (25), which is arranged at the end of the main lever (27) of the four-bar linkage (26), is designed to be angular in cross-section, with two legs (36, 37), arranged at right angles with respect to one another, for pressing a blank onto a radially inner wall (38) and onto a side wall (39), which is directed transversely with respect to said inner wall, of the folding mandrel (24) by translatory movement of the pressing-on member (25).

## Revendications

1. Dispositif de transmission de forces en rapport avec des machines, en particulier des empaqueteuses, constitué d'un premier organe de section circulaire ou cylindrique, en particulier d'un arbre (10) ou d'un bout d'arbre, et d'un deuxième organe, en particulier d'un levier de commande (11), le deuxième organe présentant un trou (13) dans lequel le premier organe est ancré par une partie d'extrémité, le deuxième organe étant pourvu dans la zone du trou (13) d'une fente traversante ouverte (14), et une vis de serrage (16) s'étendant dans le deuxième organe perpendiculairement à la fente (14) de façon telle que, lorsqu'on la serre, le trou (13) se rétrécit, caractérisé par le fait que l'extrémité du premier organe (10) qui entre dans le trou (13) présente un aplatissement (17) avec surface plane d'ajustement (18), que le trou (13) présente un contre-aplatissement (19) correspondant à l'aplatissement (17), le premier organe (10) s'appuyant par l'aplatissement (17) sur le contre-aplatissement (19), et que le deuxième organe (11) est pourvu de la fente (14) sur le côté opposé au contre-aplatissement (19).

2. Dispositif selon la revendication 1, caractérisé par le fait que le contre-aplatissement (19) situé dans la zone du trou (13) du deuxième organe (11) est dirigé perpendiculairement à un plan médian longitudinal du levier de commande (11).

3. Dispositif selon la revendication 1, caractérisé par les caractéristiques suivantes :
a) le deuxième organe est un levier de commande (11) et fait partie d'une tringlerie à quatre articulations (26),
b) une extrémité du levier de commande (11) est placée sur le premier organe (10), qui est monté à un endroit fixe,
c) à l'autre extrémité du levier de commande (11) est articulé un levier principal (27) à l'extrémité libre duquel est monté un organe presseur (25) pour le serrage d'un flan d'un paquet contre un mandrin de pliage (24) d'un revolver de pliage de l'empaqueteuse,
d) un levier de support (28) est d'une part joint par un palier d'articulation (29) au levier principal (27) et d'autre part monté à un endroit fixe dans la zone d'un palier d'articulation (30).

4. Dispositif selon la revendication 3, caractérisé par le fait que l'organe presseur (25) placé à l'extrémité du levier principal (27) de la tringlerie à quatre articulations (26) a une section en équerre et deux ailes perpendiculaires (36, 37) pour le serrage d'un flan contre une paroi intérieure radialement (38) et une paroi latérale (39) perpendiculaire à celle-ci du mandrin de pliage (24) par un mouvement de translation de l'organe presseur (25).
